# EUROPEAN PATENT SPECIFICATION

(11) **EP 0 837 578 B1**
(45) Date of publication and mention of the grant of the patent: **22.06.2005**
(21) Application number: 97306849.7
(22) Date of filing: 04.09.1997
(51) Int. Cl.: H04L 12/14, H04L 12/26, H04Q 11/04

(54) **System and method for measuring and accounting for data traffic on networks**
System und Verfahren zum Messen und Abrechnen des Datenverkehrs in Netzwerken
Système et méthode pour la mesure et la comptabilitée du trafic de données à travers un réseau

(30) Priority: 20.09.1996 US 717339
(43) Date of publication of application: 22.04.1998
(73) Proprietor: INTERNATIONAL BUSINESS MACHINES CORPORATION, Armonk, NY 10504 (US)
(72) Inventor: Flavin, Robert A., Yorktown Heights, New York 10598 (US); Vogl, Norbert G., Mahopac, New York 10541 (US); Purdy, Geoffrey H., Roxbury, Connecticut 06783 (US); Nihal, Perwaiz, Fishkill, New York 12524 (US); Clarke, Edward P., Jr., Ossining, New York 10562 (US)
(74) Representative: Williams, Julian David

(56) References cited:
- GB-A- 2 295 299
- US-A- 5 197 002
- US-A- 5 406 555
- US-A- 5 557 746
- SCHAPELER G ET AL: "ATD-SPECIFIC NETWORK MANAGEMENT FUNCTIONS AND TMN ARCHITECTURE" ELECTRONICS AND COMMUNICATION ENGINEERING JOURNAL, vol. 4, no. 5, 1 October 1992, pages 323-330, XP000323715

## Description

The present invention relates to a system and method for determining the amount, source, and destination of data traffic on a network.

A computer network enables two or more computers to communicate with each other in a timely manner. These networks are physically composed of the computers themselves, and a common medium (such as a telephone line, a fiber optics cable,a coaxial cable, or an agreed upon frequency in the broadcast spectrum, e.g. the infrared spectrum, radio frequencies, cellular phone frequencies, or satellite band frequencies) which interconnects the computers together, and network adapters which provide the hardware interface between the computers and the medium. Computer networks are often found in office buildings where computers in each office are connected to common coaxial cables. These office networks, called local area networks or LANs, allow the computers to share common resources such as a disk drive, fax machine, scanner or printer, amongst themselves. Smaller computer networks, also called LANs, may also be found in homes to interconnect family computers with common resources.

Besides physical resources such as fax machines, scanners,printers, or disk drives, computers on a network can share intellectual property. For instance, a computer in an office LAN may be used to sharing company news items, memos, or databases such as a database containing employee office addresses and phone numbers. Computers may also be used to manage and distribute electronic mail (e-mail). One widely used method of sharing documents (text, graphics, as well as audio/video files) is through World Wide Web and/or gopher servers. A widely used method of distributing e-mail is through SMTP (Simple Mail Transfer Protocol) servers.

The network connected computers communicate to each other through network protocols. These protocols define how a computer sends a signal across a given medium, (such as a telephone line, fiber optic cable, coaxial cable, or a frequency through the air), how a computer listens to a given medium, and the format of data the computer sends and receives over the medium. Telephone modems have a protocol for communicating over a telephone line, the Ethernet and Token-Ring protocols along with Ethernet and Token-Ring adapters allow computers to communicate over bus style architectures such as a shared coaxial cable or range of radio frequencies in the air. And, the SONET (Synchronous Optical Network) protocol defines how computers communicate over fiber optic cables. Other protocols such as ISDN (Integrated Services Digital Network) and SS7 (Signaling System #7) allow computers to communicate over high quality telephone lines. Examples of data protocols are IP (the Internet Protocol), IPX, NETBIOS, DECnet, ATM (Asynchronous Transfer Mode), and Frame Relay.

Local Area Networks (LANs) are often connected together to form Wide Area Networks (WANs). A WAN may be used to interconnect the LANs of different company locations (sites) together. WANs may also be used to connect LANs of several different organizations (companies; colleges; universities; local, state, or national government offices) together to facilitate inter-communication. The Internet is an example of such a WAN.

Local Area Networks (LANs) and individual computers are often also connected together to form Community Area Networks (CANs). Regional Internet Service Providers (ISPs) are examples of businesses which provide CAN access to their customers. Cable television system operators also provide CAN access through their hybrid fiber-optic / coaxial-cable (HFC) networks.

Information is transmitted on each of these networks (LAN,CAN, WAN) in appropriate units of measure. For example, in a digital network, information is transmitted from a computer in bits. Depending on the hardware protocol, the bits may be grouped together into payload data units (PDUs), often referred to as bytes, packets, or cells. Computers communicating to each other via modems on a telephone line will typically send and listen for seven or eight bit bytes. Computers communicating over the Internet Protocol (IP) will send and receive 'packets', a groups of eight bit bytes, of a varying length (typical packet sizes range from 296 to 65535 bytes). And, computers communicating to each other through the Asynchronous Transfer Mode (ATM) protocol will send and listen for 'cells', groups of eight bit bytes of a fixed length (53 bytes).

This transmission, the sending and/or receiving of a PDU over a network, is called a use of the network. This use can be measured by taking into account the time of transmission (and reception) of the PDU, and the number and, optionally, size of the PDUs sent or received. The computers which send and/or receive PDUs are capable of maintaining a count of the number (and optionally, size) of PDUs sent and/or received.

The various types of networks (LAN, WAN, CAN) often interconnect via routers and/or switches. Routers and switches are special purpose computers which listen on their connected networks for protocol data units (PDUs). Upon receiving a PDU, they examine the destination of the PDU and based upon internal tables, optionally retransmit the PDU on a different connected network. Routers and switches are used to provide a common point of access between two or more networks and to filter and/or isolate network traffic. PDUs which appear on one connected network and which have destination addresses on the same network, would not be retransmitted to all the connected networks of a switch or router, thus limiting the overall network usage of the PDU. Routers and switches have the ability to count the number (and size) of PDUs which they have routed or switched from one connected network to another.

Communications over networks in the prior art have several limitations. All networks are by nature limited in bandwidth, i.e., the maximum number of PDUs that can be transmitted in a given time over the network is fixed. If there is no mechanism to regulate and monitor the use of this network bandwidth, the bandwidth of the network will be used inefficiently.

There also will be inequitable use of the networks because some users will tie up the network resources inefficiently at the expense of others. Furthermore, owners/operators of the network and government regulators need a way to monitor and regulate/control these networks so they are used in an optimum manner to generate profits and grant fair access to all users.

Currently in cable television type hybrid fiber-coax networks, cable networks give unlimited access to their networks at a fixed, and often low, price. Because there are inadequate mechanisms to monitor the individual user's use and access, some users can and do use a disproportionate amount of the available bandwidth on the network. This is often accomplished without the knowledge of the network owner/operator. For example, one of the users may be operating a business such as a bulletin board that: 1. uses a great deal of bandwidth that therefore is denied to other users, 2. may be contractually forbidden in the agreement between the user and the network owner, may be illegal in the content transmitted by the bulletin board operation.

US 5,197,002 and US 5,406,555 each describe a computer system connected to a network, the computer system comprising: storage means for cumulatively storing counts of information units, the storage means comprising a record having usage information associated with an entity connected to the network in terms of one or more information units.

Similar systems are described in GB 2,295,299 and US 5,557,746.

Currently there are inefficient methods for charging/paying accurately and fairly for network use. For example, users that consume large amounts of bandwidth pay no more than those that users that use much less. Furthermore, a large number on small bandwidth users can be denied access to the network because a few large users have used a disproportionate amount of the network resources.

Further, because there is no penalty for using very large amounts of the bandwidth, there is a strong tendency for the network to be used inefficiently which causes deterioration of network quality for all network users. (For example, a large user that can gain unlimited and cheap access to the network has no incentive to use compression technology or other techniques that would use the network more efficiently.) Since an inefficiently used network is slower and more difficult to access than an efficiently used one, it therefore will be less commercially competitive.

In addition, if there is no mechanism to monitor the network use by an individual user, there is no accurate way to charge fairly for a disproportionate amount of use. Therefore, network owners will not get a fair return on their investment from the large users. Furthermore, without accurate information about information traffic on the network, network owners are not be able to correctly plan for and predict network use so that they can effectively allocate their investment and/or effectively design and maintain their network.

In accordance with present invention, there is now provided a computer system connected to a network, the computer system comprising: storage means for cumulatively storing counts of information units, the storage means comprising a record having usage information associated with an entity connected to the network in terms of one or more information units; means for accessing a polled amount in a router on the network, the polled amount being an amount of network usage in terms of information units associated with the entity over a polling period; and, means for incrementing the usage information with the polled amount so that the usage information represents a cumulative amount of network usage by the entity over a time period; characterised in that the record has one or more usage fields that contain a cumulative amount of network sent usage used by the entity in terms of a one or more information units sent by the entity and a cumulative amount of network received usage used by an entity in terms of a one or more information units received by the entity; the means for accessing accesses a sent polled amount and a received polled amount in a router on the network, the sent polled amount being an amount of network usage by the entity in terms of information units sent by the entity over a polling period, the received polled amount being an amount of network usage by the entity in terms of information units received by the entity over the polling period, and increments the sent usage information with the sent polled amount and incrementing the received usage information with the received polled amount so that the sent usage information represents a cumulative amount of information units sent by the entity over a time period and the received usage information represents a cumulative amount of information units received by the entity over the time period; and the system comprises a weighting process that weights the sent usage information with a sent weight and weights the received usage information with a received weight.

Viewing the present invention from another aspect, there is now provided method for counting a plurality of information units on a network, comprising the steps of: cumulatively storing counts of a plurality of information units in a record in a data structure, the information units in each of the records being usage information associated with an entity connected to the network; accessing a polled amount in a router on the network, the polled amount being an amount of network usage in terms of information units that are associated with the entity over a polling period; and incrementing the usage information with the polled amount so that the usage information represents a cumulative amount of network usage by the entity over a time period; characterised in that the record, has one or more usage fields that contain a cumulative amount of network sent usage used by the entity in terms of a one or more information units sent by the entity and a cumulative amount of network received usage used by an entity in terms of a one or more information units received by the entity; and the step of accessing accesses a sent polled amount and a received polled amount in a router on the network, the sent polled amount being an amount of network usage by the entity in terms of information units sent by the entity over a polling period, the received polled amount being an amount of network usage by the entity in terms of information units received by the entity over the polling period, and increments the sent usage information with the sent polled amount and incrementing the received usage information with the received polled amount so that the sent usage information represents a cumulative amount of information units sent by the entity over a time period and the received usage information represents a cumulative amount of information units received by the entity over the time period; and the method comprises the step of weighting the sent usage information with a sent weight and weighting the received usage information with a received weight.

Viewing the present invention from yet another aspect, there is now provided a computer system connected to a network comprising one or more central processing units and one or more memories, and further comprising: a cumulative packet count data structure, residing on the memory, having one or more entity records, each entity record having one or more usage fields that contain a cumulative amount of network sent usage used by an entity in terms of a one or more information units sent by the entity and a cumulative amount of network received usage used by an entity in terms of a one or more information units received by the entity; and an incrementing process, executed by the central processing unit, that accesses a sent polled amount and a received polled amount in a router on the network, the sent polled amount being an amount of network usage by the entity in terms of information units sent by the entity over a polling period, the received polled being an amount of network usage by the entity in terms of information units received by the entity over the polling period, the incrementing process incrementing the sent usage information with the sent polled amount and incrementing the received usage information with the received polled amount so that the sent usage information represents a cumulative amount of information units sent by the entity over a time period and the received usage information represents a cumulative amount of information units received by the entity over the time period.

In a preferred embodiment of the present invention, a computer connected to a network has a cumulative packet count data structure that resides in the memory of the computer and has one or more records. Each of the records has usage information associated with an entity (a user or service provider with one or more other computers) connected to the network. The information is in terms of one or more information units, e.g. packets, cells, bytes, and bits. An incrementing process, executed by the central processing unit of the computer accesses a polled amount in a router on the network. The polled amount indicates an amount of network usage associated with the entity in terms of the information units used over a polling period. The incrementing process increments the usage information with the polled amount so that the usage information indicates a cumulative amount of network usage by the entity over a time period. The network usage can be weighted by various (network) cost factors. The weights can also be used to distribute or allocate (weighted) usage among the various entities on the network.

The present invention thus provides an improved system and method for monitoring the use of a network,e.g for a cable network and/or the internet.

Preferred embodiments of the present invention includes systems and methods for monitoring the use of a network and monitoring the source, destination, and amount of information transmitted on the network.

Preferred embodiments of the present invention also include systems and methods for obtaining information that allows effective design of the network.

Preferred embodiments of the present invention also include systems and methods for obtaining information that allows effective and accurate charging for network use.

Preferred embodiments of present invention further include systems and methods for obtaining information that allows charges for network use to be charged to either the source or the destination of the information transmitted on the network.

Preferred embodiments of the present invention still further include systems and methods for obtaining information that allows efficient and equitable use of the network.

Also, preferred embodiments of the present invention include systems and methods for obtaining information to allow computer programmers to design applications which make more efficient and/or less costly use of network resources.

Still furthermore, preferred embodiments of the present invention include systems and methods for obtaining information to influence the writers of computer applications to transfer data in the most efficient number of message payloads.

Preferred embodiments of the present invention will now be described with reference to the accompanying drawings, in which:
Figure 1 is a block diagram of a preferred embodiment of the hardware.
Figure 2 is a block diagram of a prior art router count table.
Figure 3 is a block diagram of a cumulative packet count table.
Figure 4 is a block diagram of a weighted table.
Figure 5 is a block diagram of a class table.
Figure 6 is a flow chart showing the steps of a process to increment packet tables.
Figure 7 is a flow chart showing the steps to increment weighted tables.

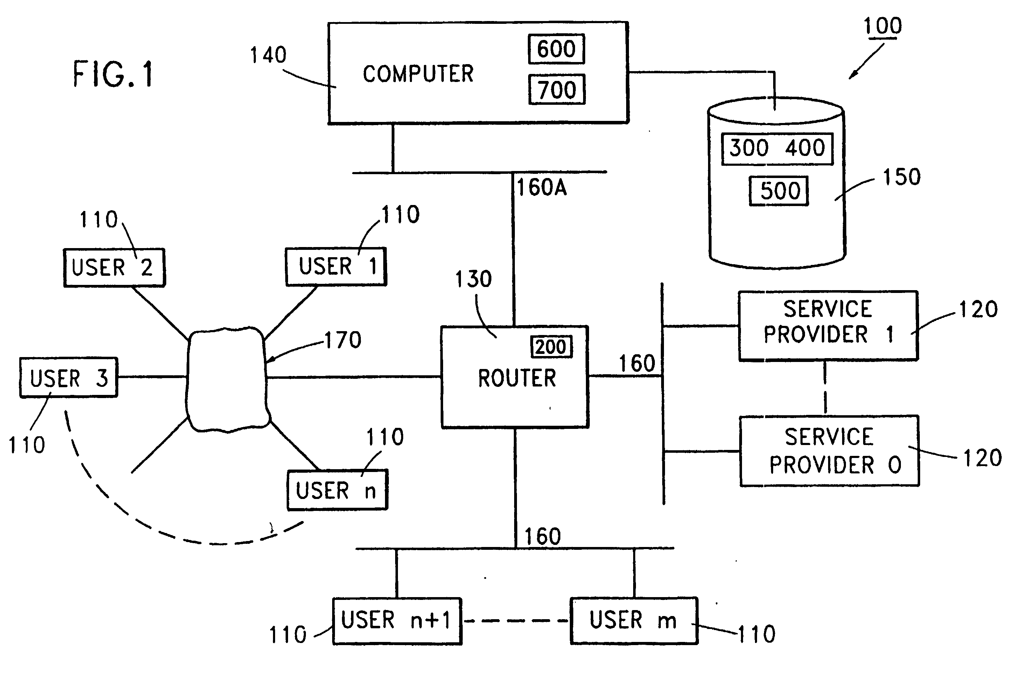

Figure 1 is a block diagram of a preferred hardware and software model 100 of our invention. Block 130 shows a centralized router which routes data traffic between users 110 and service providers 120. The router 130 routes traffic over general purpose networks (160, 160A, 170) like tokenring networks 160 and ethernet networks 170. Other network types (160, 170) can also be used. For example, ATM (Asynchronous Transfer Mode), ISDN (Integrated Services Digital Network), and SONET (Synchronous Optical Network). Networks (160, 170) are well known and include wire, fiber optic, coaxial cable, twisted pair, infra red, and radio frequency (e.g. satellite links) networks. These network use various protocols like TCP/IP (e.g., the internet), IPX, DECnet. See U.S. Patent Number 5,371,852 to Attanasio et al. issued on December 6, 1994 which is herein incorporated by reference in its entirety.

Blocks 120 represent service providers. These service providers 120 could be local businesses resident within the local area network, or could be businesses which are on interconnected networks (eg, the Internet) such as Yahoo, IBM, or Sears. Other examples of service providers 120 include cable TV providers, telephone companies, internet service providers, and any individual or company that operates a web site on a wide area network and/or internal/private (local area networks). The service providers 120 may also be connected to the router through private networks, such as leased telephone lines to AOL, Compuserve, or Prodigy.

Blocks 110 represent discreet users of the network. The service providers 120 generally provide information and/or a service (e.g., documents, a movie, merchandise, and/or professional services) while the users 110 use that service and/or information. The users 110 often are customers of the service providers 120.

Block 140 is a computer which is connected to the router 130 over a data network (shown in the diagram as an ethernet network 160A). This computer is responsible for accessing data records from the router 130 by executing the process 600. The computer 140 is equipped with one or more central processing units and one or more memories. Block 150 is data storage which is available to computer 140 and which holds tables 300, 400, and 500. These tables are accessed and updated through processes 600 and 700. In alternative preferred embodiments, any or all of the data storage 150, tables (300, 400, 500) and processes (600, 700) can reside on the router 130.

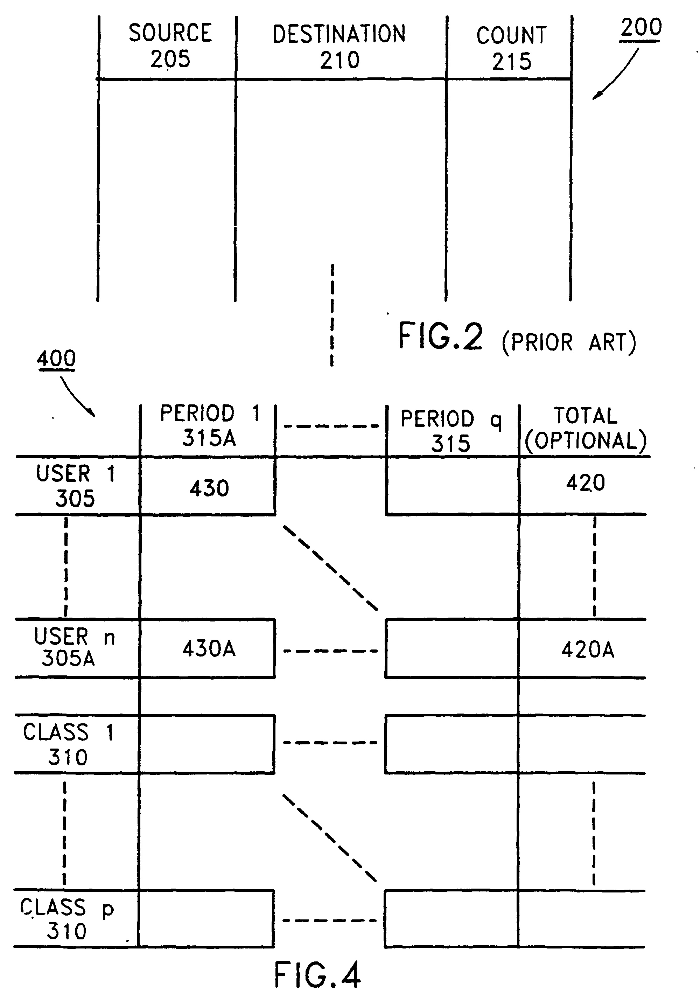

Figure 2 is a block diagram of a prior art router count table 200 that is created by the router 130. This diagram shows the packet count information which is typically available from a router. One preferred embodiment of this table 200 is provided by Cisco Systems Inc. as an "active accounting database" that is described in tables 16-8 and 19-6 of "The Router Products Command Reference" document number DOC-RTCF10.0 which is herein incorporated by reference in its entirety.

Fields 205 contain the source addresses of computers which transmitted data through the router. Fields 210 contain the destination addresses indicating which computers the transmitted data was sent to. Fields 215 contain the count of information units which were transmitted from a given computer in a field 205 to a given computer in a field 210 since the table 200 was last reset. In a preferred embodiment, fields 215 contain counts of IP (Internet Protocol) packets. Other information units, such as byte counts, or cell counts, can be used. In embodiments which have the byte as an information unit, the total traffic through the router 130 is measured. Each individual packet which passes through a router 130 (and/or switch) consumes resources from the router in terms of time, as the router needs to examine, and operate on, the packet source and destination address. Therefore, when the same number of bytes are transmitted, if fewer packets are used during the transmission, less of the router overhead cost is incurred. Hence, packet counts are a reasonable type of information to monitor and include in 215.

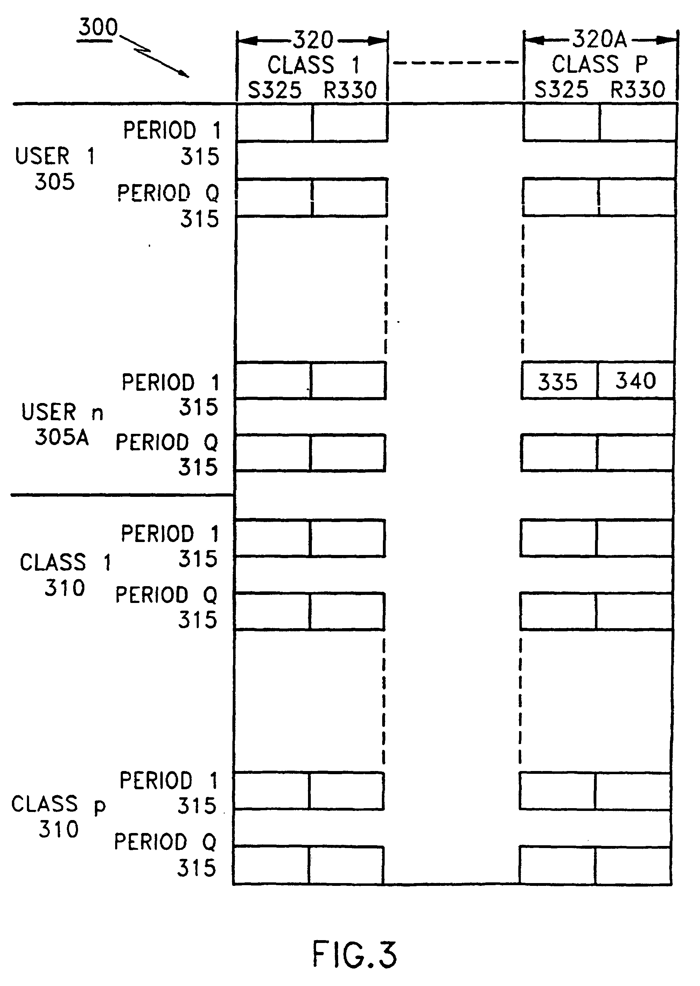

Figure 3 is a block diagram of a Cumulative Packet Count Table 300. This table maintains a cumulative count of information units, e.g. the number of packets or bytes, in a given time period which have been sent and/or received by a given entity, i.e., an indication of entity usage of the network. An entity is any user 110 or service provider 120 that is connected to the network, e.g. a user 110 or a class 310. The table 300 has a plurality of entity records 305,e.g., here typically designated by a user record 305. The user record 305 identifies an identifiable and distinct computer, used by the user 110, which can send and/or receive data packets through the router 130.

A class 310 is a grouping of any computers which can send or receive data packets through the router 130. In one preferred embodiment, the computers of each of the service providers 120 are grouped into classes, e.g. the computers of AOL are grouped into an AOL class, the computers of IBM are grouped into an IBM class. By grouping related computers together, the amount of necessary information in the cumulative packet count table 300 to maintain cumulative trafficcounts of information units is reduced. Classes 310 may also include some or all of the users 305 in the system 100,e.g. when determining the amount of use for most or all of the network for design and modification purposes. Additionally, a class 310 may also be defined to include all computers not included in other classes. In one preferred embodiment, class 310 membership is defined and identified by using table 500 as described below.

In one preferred embodiment, the cumulative packet count table 300 subdivides the record for each user 305 or class 310 into one or more time periods 315. These periods are used to divide the cumulative packet counts over time. In a preferred embodiment, two periods, peak and off-peak, are defined to count the number of packets sent during predetermined peak hours of network use and off-peak hours of use. Other time period 315 selections are envisioned. Subdividing the record into time periods permits determining and monitoring the network usage per each of the time periods, e.g., peak and non peak use.

Each data record 305 has one or more field 320. Each field 320 of the cumulative packet count table 300 records (contains a value of) the number of information units (packets) sent and/or received from a user 305 or class 310 to and/or from a class 310 in a given time period 315. For instance, one or more of the fields 320 can divided into send fields 320S and receive fields 320R. For example, the number of information units (packets) sent to a class, typically 320A, is recorded in fields 325, e.g. in the 320S field. The number of information units (packets) received from a class 320A is recorded in fields 330, e.g. the received field 320R.

Processes described below cause the values in these fields to be a cumulative count of information units send and/or received by a given entity over a given time period. For example, entry 335 holds the cumulative count of packets sent from a typical user, userN 305A, to a typical class, classP 320A, during the first time period, period1 315A. Entry 340 holds the cumulative count of packets received from the typical class 320A by the typical user 305A during the first time period.

Note that the information units (335, 340) contained in the fields 325 include packets, bytes and/or any other unit of information measurement can be stored in this manner in cumulative packet count table 300 that indicates a use of the network (160, 160A, 170). Further note that the table 300 (and other tables 400 and 500 below) can take the form of any data structure known in the art.

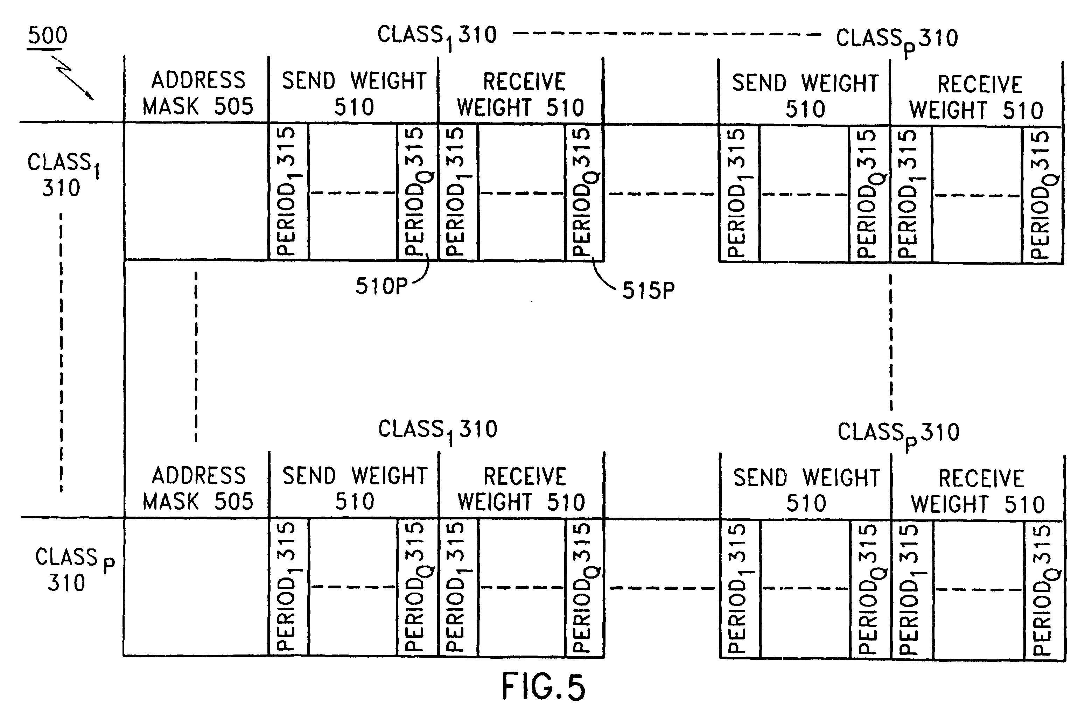

Figure 4 is a block diagram of a Weighted Table 400. Each entry, typically 430, in the table holds a weighted count of the number of cumulative information units (packets) that have been sent and/or received by a user 305 or class 310 during a time period 315A. Optionally, entries 420 in the table holds a weighted count of the total (cumulative) number of packets sent and/or received by a user 305 or class 310.

For example, entry 430A holds the weighted number of packets sent by and/or received from a user 305A during time period 315A. Optionally, entry 420A holds the total weighted number of packets sent by and/or received from a user 305A over all time periods 315.

Weights typically are a factor that represents the cost of using the network. Here cost can be a dollar cost incurred and/or charged by the service provider, e.g. cost of equipment used; a factor describing network quality; a raw information unit count (weight of one) etc. The weights can also be used to select which information units are counted, e.g. a weight of zero causes an information unit not to be counted, and/or how the count of the information units (network usage) is distributed among the users 110 and service providers 120 as described below. In a preferred embodiment, weights represent a dollar cost for transmitting information from a user 305 or class 305 to another user 305 or class 305.

Figure 5 is a block diagram of a Class Table 500. This table is used to identify individual computers as members of classes 310 and/or as users 305. The table also contains the weighted cost of sending a packet from a first class 310 or user 305 to a second class 310 (the first and second class can be the same, i.e., different users/service providers in the same class), and the weighted cost of receiving a packet sent from the first class 310 or user 305 to the second class 310. Fields 505 holds information which is used to identify computers as members of a class. In a preferred embodiment, 505 holds a bit mask, such as "9.2.0.0" which can be compared against a computers internet address. For example, if the result of a binary AND between the mask and the machines address yields the mask, the computer is considered to be a member of the class. In a preferred embodiment, there are two fields 510 and 515 for each class 310 in the system 100. Fields 510 hold the send weight; a cost of sending a packet of information from a class 310 or user 305 to a class 310. These fields are further subdivided by time period 510P. Fields 515 hold the receive weight; a cost of receiving a packet of information sent by a class 310 to a class 310. These fields can be further subdivided by time period 515P.

In a preferred embodiment, the send weights 510 and the receive weights 515 are set to dollar costs which reflect and influence the network usage, and can be used for billing the entities. The send weight 510 and receive weight 515 fields for classes 310 of service providers 120 can be set to shift all, some, or none of the network usage cost of sending and receiving information units to and from a user 305. For example, a select service provider 120 such as a large company may wish to absorb all the network usage costs of its telecommuting employees. The send weight 510 and receive weight 515 for the service provider's 120 class 310 would be set to the entire cost of the network usage to transmit or receive an information unit from a user (employee) 305, whereas send weights 510 and receive weights 515 for the employees would be set to zero for sending and receiving packets to and from the company service provider class 310. In a like manner, a company such as a realtor which wanted to encourage viewing, browsing, of its products could also have sending and receiving weights 510,515 set to incur the total cost of network usage for all information units sent to or received by the realtor's destination on the network.

Similarly, the receiving weights 510 and send weights 515 for users 305 could be set such that the users 305 are charged for all of the network usage involved in sending and receiving information units from a select class 310 of service providers 120. Users that use a disproportionate amount of the network can be charged a higher rate so that this use is discouraged or equitably paid for. And, the receiving weights 510 and send weights 515 for users 305 and classes 310 could be set such that both the users 305 and service providers 120 are charged for a percentage of the network usage. This scenario could be used, for instance, during a promotional, or trial, period for users to test out a service providers offerings.

Costs (weights) can also differ for different time periods 315. By charging one or more users different rates (weights) for different time periods, network usage can be encouraged to move to off peak (cheaper) times. Also, users that use the network during peak times might be charged more because of the burden that they put on the network and for causing the network designers to invest more in the network to handle the peak time period usage.

The weighted costs, along with the information units allocated to service providers 120, see table 400 below, can be reported back to the service providers 120. This information could then influence the service providers to modify their offerings such that they transmitted and received information in a more efficient and minimally costly manner, making better use of network protocols.

Alternatively, the receive weight 510 and/or send weight 515 can be set to "1" and a straight count be made for each user/class in a given time period so that comparisons can be made with other users/classes on the basis of use. This information would be useful to a system designer and/or a network administrator in planning network upgrades and/or network operating strategies.

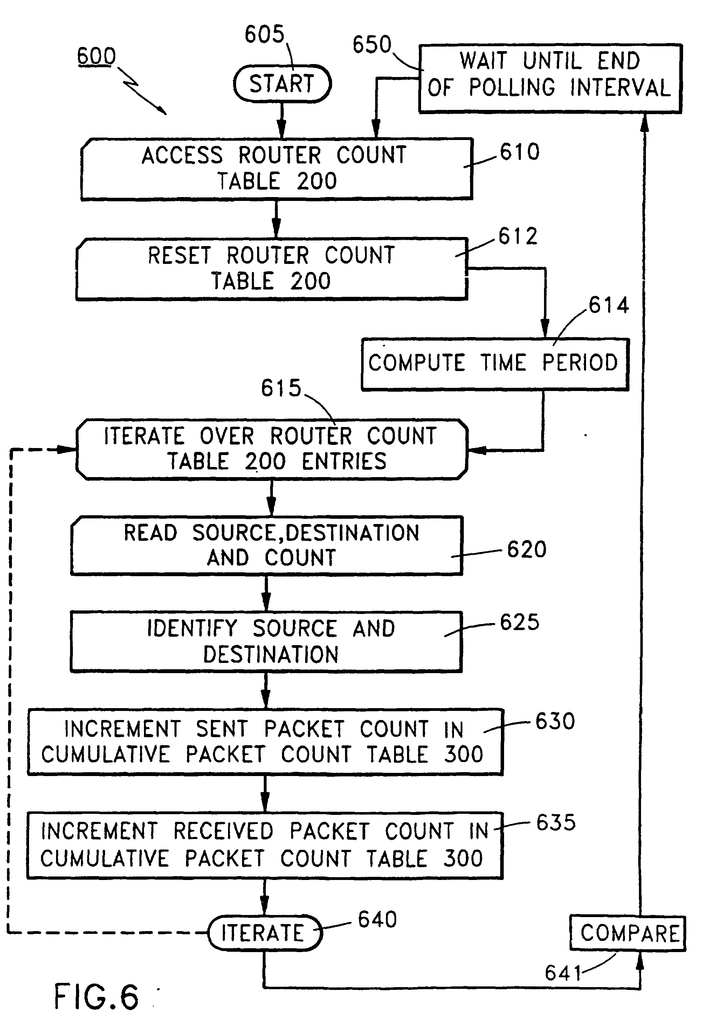

Figure 6 is a flow chart showing the steps of an increment packet tables process 600 executed by computer 140 to periodically update the cumulative packet count table 300. The process begins 605 by accessing the router count table 200 in step 610. In the preferred embodiment, the router count table 200 is retrieved from the router 130 through an SNMP (Simple Network Maintenance Protocol) interface. In step 612, the process resets the router's 130 copy of the router count table 200. This has the effect of causing the next access 610 to return only the counts of packets transmitted during a polling period. The polling period is defined to be short enough to avoid any problems of counter overflow in the router 130. In the preferred embodiment, the polling period is set to encompass ten minutes.

In the one embodiment, a Cisco Systems Router is used as router 130 and
1: snmpinfo -m get -h router actCheckPoint.0
2: snmpinfo -m set -h router actCheckPoint.0=xxx
3: snmpinfo -m dump -h router ckActPkts
are Unix commands which could be run to access the router count table. Commands 1 and 2, where xxx above is the number returned by command 1, prepare the current router count table for access. Command 3 dumps the router count table to an output of computer 140. The Cicso Systems Router automatically resets its router count table each time it is accessed.

The process continues in step 614 and computes the current time period 315. This computation may be done based on the system clock in the computer 100. The process 600 then transfers the information in the router count table 200 to the cumulative packet count table 300.

See steps 615, 620, 625, 630, and 635. For a preferred embodiment, in step 620, the source address 205, destination address 210, and count of packets 215 transmitted are read from a row in the router count table 200. Step 625 identifies which classes 310 the source address 205 and destination addresses 210 belong. In the preferred embodiment,step 625 identifies the class 310 that an address (205and/or 210) belongs to through a bit mask 505 of the Class table 500. A binary AND is made against the given address 205, 210 and a given class 310. If the result of the AND yields the class bit mask 505, the address 205, 210 is said to be a member of the class 310. If the result does not match the class bit mask 505, the address 205, 210 is not a member of the class 310. Step 615 iterates over all of the router count table 200 entries.

Steps 630 and 635 add the count of packets 215 into the cumulative packet count table 300. In step 630, the sent packet count 325 entry for the user 305 and/or class 310 of the source address and the current time period 315 is incremented by the count of packets 215 (or other measurement). In step 635, the receive packet count 330 entry for the user 305 and/or class 310 of the destination address and the current time period 315 is incremented by the count of packets 215. Optionally, the source and destination addresses may belong to a number of classes. In this alternative implementation, a number of sent packet count 325 and received packet count 330 entries would be incremented during steps 630 and 635.

The process continues in step 650 by waiting until the end of a polling interval. After the polling interval has passed, the process begins again at step 610.

After the completion of step 640, the process 600 will have transferred the information stored in the router count table 200 to the cumulative packet count table 300. During the transfer, the process will have applied a grouping (class membership) to account for any information units transferred to and from any given one or more computers. The router count table only contains information unit counts for information sent from one address to another. The increment packet tables process takes this information and classifies it, filling in the cumulative packet count table with the counts of information units sent from one group of related computers to another. Note: In alternative embodiments of networks (for example, IP networks running with DHCP, Dynamic Host Configuration Protocol), a computers address may change over time. In these embodiments, the process performs an important task of identifying users given their current address and recording the information unit count in the proper record.

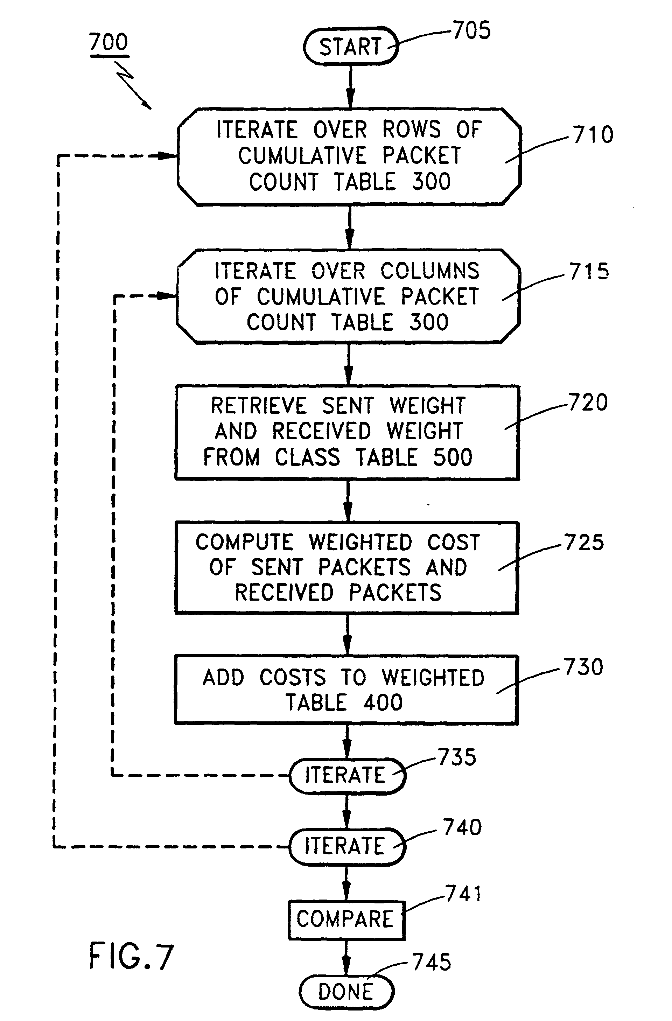

After step 640, in step 641, the information in the cumulative packet count table is ready to optionally be weighted, plotted, or otherwise analyzed. A process which weighs the cumulative packet count table in shown in Figure 7.

Figure 7 is a flow chart showing the steps of an increment weighted tables process 700 executed by computer 140 to update the weighted table 400 based upon information stored in the cumulative packet count table 300. The process 700 begins 705 by totalling weighted packet counts of packets sent to and received from users 305 and classes 310. See steps 10, 715, 720, 725, 730, 735, and 740. In steps 715, 720, 725, 730, and 735, the process 700 totals the weighted count of packets sent to and received from a single user 305 or class 310. Step 720 retrieves the sent weight cost 510P and received weight cost 515P for a user 305 or class 310 during a time period 315. Step 725 multiplies these costs by the count of packets sent to 325 and received from 330 a class 310 during the time period 315 the multiplication results in weighted costs. Step 730 adds the weighted costs to the entry 430 of the weighted table 400 for the user 305 or class 310. Optionally, the weighted costs are also added to the total entry 420 in the weighted table 400 for the user 305 or class 310.

After step 740, in step 741, the information in the weighted table is complete and ready to be optionally plotted or otherwise analyzed. Each field 430 in the weighted table 400 will contain the weighted network usage of all the network units transmitted or received by the user 305 or class 310. The rows of the column can be sorted to show high bandwidth users of the network, and can be plotted to show peak periods of network use.

Given this disclosure alternative equivalent embodiments will become apparent to those skilled in the art. These embodiments are also within the contemplation of the inventors.

## Claims

1. A computer system (160) connectable to a network (160A), the computer system comprising:
storage means (150) for cumulatively storing counts of information units, the storage means comprising a record having usage information associated with an entity (110, 120) connected to the network in terms of one or more information units;
means (600) for accessing a polled amount in a router (130) on the network, the polled amount being an amount of network usage in terms of information units associated with the entity over a polling period; and,
means for incrementing the usage information with the polled amount so that the usage information represents a cumulative amount of network usage by the entity over a time period;
**characterised in that** the record has one or more usage fields that contain a cumulative amount of network sent usage used by the entity in terms of a one or more information units sent by the entity and a cumulative amount of network received usage used by an entity in terms of a one or more information units received by the entity;
the means for accessing is adapted to access a sent polled amount and a received polled amount in a router on the network, the sent polled amount being an amount of network usage by the entity in terms of information units sent by the entity over a polling period, the received polled amount being an amount of network usage by the entity in terms of information units received by the entity over the polling period, and is adapted to increment the sent usage information with the sent polled amount and the received usage information with the received polled amount so that the sent usage information represents a cumulative amount of information units sent by the entity over a time period and the received usage information represents a cumulative amount of information units received by the entity over the time period; and the system comprises
a weighting process is adapted to weight the sent usage information with a sent weight and weights the received usage information with a received weight.

2. A system, as in claim 1, where the entity is a user (110).

3. A system, as in claim 1, where the entity is a member of a class.

4. A system, as in claim 1, where the entity is a service provider (120).

5. A system, as in claim 1, comprising the router.

6. A system, as in claim 1, where the information units include any one of the following: a packet, a cell, a byte, and a bit.

7. A system, as in claim 1, where the entity is identified by a network address.

8. A system, as in claim 7, where the network address changes over time.

9. A system, as in claim 1, where the sent weight includes any one of the following: a cost of the information unit, a "1", and a "0".

10. A system, as in claim 1, where the received weight includes any one of the following: a cost of the information unit, a "1", and a "0".

11. A system, as in claim 1, where a first entity is a user and a second entity is a service provider and the sent weight and the received weight for the user are set to "0" and the sent weight and received weight for the service provider are set to one or more costs for the information unit.

12. A system, as in claim 1, where a first entity is a first user and a second entity a second user and a third entity is a service provider and the sent weight for the first user is set to a first sent cost, the received weight for the first user is set to a first received cost, the sent weight for the second user is set to a second sent cost, the received weight for the second user is set to a second received cost, the sent weight for the service provider is set to a provider sent cost, the received weight for the service provider is set to a provider received cost.

13. A system, as in claim 1, where the sent usage of one or more entity is divided into usage over two or more time periods and each, of the time periods has a respective period weight.

14. A system, as in claim 1, where the received usage of one or more entity is divided into usage over two or more time periods and each of the time periods has a respective period weight.

15. A system, as in claim 1, where the sent usage information and the received usage information for two or more entities is compared.

16. A method for counting a plurality of information units on a network (160), comprising the steps of:
cumulatively storing counts of a plurality of information units in a record in a data structure, the information units in each of the records being usage information associated with an entity (110, 120) connected to the network;
accessing a polled amount in a router (130) on the network, the polled amount being an amount of network usage in terms of information units that are associated with the entity over a polling period; and
incrementing the usage information with the polled amount so that the usage information represents a cumulative amount of network usage by the entity over a time period;
**characterised in that**
the record, has one or more usage fields that contain a cumulative amount of network sent usage used by the entity in terms of a one or more information units sent by the entity and a cumulative amount of network received usage used by
an entity in terms of a one or more information units received by the entity; and
the step of accessing accesses a sent polled amount and a received polled amount in a router on the network, the sent polled amount being an amount of network usage by the entity in terms of information units sent by the entity over a polling period, the received polled amount being an amount of network usage by the entity in terms of information units received by the entity over the polling period, and increments the sent usage information with the sent polled amount and incrementing the received usage information with the received polled amount so that the sent usage information represents a cumulative amount of information units sent by the entity over a time period and the received usage information represents a cumulative amount of information units received by the entity over the time period; and the method comprises the step of
weighting the sent usage information with a sent weight and weighting the received usage information with a received weight

## Patentansprüche

1. Computersystem (160), das an ein Netzwerk (160A) anschließbar ist, wobei das Computersystem Folgendes umfasst:
Speichermittel (150) zum kumulativen Speichern von Zählwerten von Dateneinheiten, wobei die Speichermittel eine Aufzeichnung umfassen, die Benutzungsdaten in Form einer oder mehrerer Dateneinheiten aufweist, die einer an das Netzwerk angeschlossenen Einheit (110, 120) zugeordnet sind;
Ein Mittel (600) zum Zugreifen auf eine abgefragte Menge auf einem Leitwegrechner (130) in dem Netzwerk, wobei die abgefragte Menge eine Menge an Netzwerkbenutzung in Form von Dateneinheiten ist, die über einen Abfragezeitraum der Einheit zugeordnet sind; und
Ein Mittel zum Aufstocken der Benutzungsdaten um die abgefragte Menge, so dass die Benutzungsdaten eine kumulative Menge an Netzwerkbenutzung durch die Einheit über eine Zeitperiode repräsentieren;
**dadurch gekennzeichnet, dass** die Aufzeichnung ein oder mehrere Benutzungsfelder aufweist, die eine kumulative Menge an Netzwerk-Sendebenutzung durch die Einheit in Form einer oder mehrerer von der Einheit gesendeter Dateneinheiten enthalten, und eine kumulative Menge an Netzwerk-Empfangsbenutzung durch eine Einheit in Form einer oder mehrerer von der Einheit empfangener Dateneinheiten;
das Mittel zum Zugreifen ist so gestaltet, dass es auf eine abgefragte Sendemenge und eine abgefragte Empfangsmenge auf einem Leitwegrechner in dem Netzwerk zugreift, wobei die abgefragte Sendemenge eine Menge an Netzwerkbenutzung durch die Einheit in Form von Dateneinheiten ist, die von der Einheit über einen Abfragezeitraum gesendet wurden, und die abgefragte Empfangsmenge eine Menge an Netzwerkbenutzung durch die Einheit in Form von Dateneinheiten ist, die von der Einheit über den Abfragezeitraum empfangen wurden, und ist so gestaltet, dass es die Sendebenutzungsdaten um die abgefragte Sendemenge aufstockt und die Empfangsbenutzungsdaten um die abgefragte Empfangsmenge aufstockt, derart, dass die Sendebenutzungsdaten eine kumulative Menge an Dateneinheiten repräsentieren, die von der Einheit über eine Zeitperiode gesendet wurden, und die Empfangsbenutzungsdaten eine kumulative Menge an Dateneinheiten repräsentieren, die von der Einheit über die Zeitperiode empfangen wurden; und das System umfasst
ein Gewichtungsverfahren, das so gestaltet ist, dass es die Sendebenutzungsdaten mit einem Sendewert gewichtet und die Empfangsbenutzungsdaten mit einem Empfangswert gewichtet.

2. System nach Anspruch 1, wobei die Einheit ein Benutzer (110) ist.

3. System nach Anspruch 1, wobei die Einheit ein Mitglied einer Klasse ist.

4. System nach Anspruch 1, wobei die Einheit ein Diensteanbieter (120) ist.

5. System nach Anspruch 1, das den Leitwegrechner umfasst.

6. System nach Anspruch 1, wobei die Dateneinheiten irgendeines der folgenden beinhalten: ein Paket, eine Zelle, ein Byte und ein Bit.

7. System nach Anspruch 1, wobei die Einheit durch eine Netzwerkadresse **gekennzeichnet** wird.

8. System nach Anspruch 7, wobei sich die Netzwerkadresse im Laufe der Zeit ändert.

9. System nach Anspruch 1, wobei der Sendewert irgendeines der folgenden beinhaltet: einen Preis der Dateneinheit, eine "1" und eine "0".

10. System nach Anspruch 1, wobei der Empfangswert irgendeines der folgenden umfasst: einen Preis der Dateneinheit, eine "1" und eine "0".

11. System nach Anspruch 1, wobei eine erste Einheit ein Benutzer und eine zweite Einheit ein Diensteanbieter ist, und der Sendewert und der Empfangswert für den Benutzer auf "0" eingestellt und der Sendewert und der Empfangswert für den Diensteanbieter auf ein oder mehrere Preise für die Dateneinheit eingestellt sind.

12. System nach Anspruch 1, wobei eine erste Einheit ein erster Benutzer und eine zweite Einheit ein zweiter Benutzer ist und eine dritte Einheit ein Diensteanbieter ist, und der Sendewert für den ersten Benutzer auf einen ersten Sendepreis eingestellt ist, der Empfangswert für den ersten Benutzer auf einen ersten Empfangspreis eingestellt ist, der Sendewert für den zweiten Benutzer auf einen zweiten Sendepreis eingestellt ist, der Empfangswert für den zweiten Benutzer auf einen zweiten Empfangspreis eingestellt ist, der Sendewert für den Diensteanbieter auf einen Anbieter-Sendepreis eingestellt ist, der Empfangswert für den Diensteanbieter auf einen Anbieter-Empfangspreis eingestellt ist.

13. System nach Anspruch 1, wobei die Sendebenutzung einer oder mehrerer Einheiten in Benutzungen über zwei oder mehrere Zeitperioden unterteilt ist und jede der Zeitperioden einen entsprechenden Periodenwert hat.

14. System nach Anspruch 1, wobei die Empfangsbenutzung einer oder mehrerer Einheiten in Benutzungen über zwei oder mehrere Zeitperioden unterteilt ist und jede der Zeitperioden einen entsprechenden Periodenwert hat.

15. System nach Anspruch 1, wobei die Sendebenutzungsdaten und die Empfangsbenutzungsdaten für zwei oder mehrere Einheiten verglichen werden.

16. Verfahren zum Zählen einer Vielzahl von Dateneinheiten in einem Netzwerk (160), wobei das Verfahren die folgenden Schritte umfasst:
kumulatives Speichern von Zählwerten einer Vielzahl von Dateneinheiten in einer Aufzeichnung in einer Datenstruktur, wobei die Dateneinheiten in jeder der Aufzeichnungen Benutzungsdaten sind, die einer an das Netzwerk angeschlossenen Einheit (110, 120) zugeordnet sind;
Zugreifen auf eine abgefragte Menge auf einem Leitwegrechner (130) in dem Netzwerk, wobei die abgefragte Menge eine Menge an Netzwerkbenutzung in Form von Dateneinheiten ist, die über einen Abfragezeitraum der Einheit zugeordnet; und
Aufstocken der Benutzungsdaten um die abgefragte Menge, derart, dass die Benutzungsdaten eine kumulative Menge an Netzwerkbenutzung durch die Einheit über eine Zeitperiode repräsentieren;
**dadurch gekennzeichnet, dass**
die Aufzeichnung ein oder mehrere Benutzungsfelder aufweist, die eine kumulative Menge an Netzwerksendebenutzung enthalten, die auf die Einheit in Form einer oder mehrerer von der Einheit gesendeter Dateneinheiten entfällt, und eine kumulative Menge an Netzwerkempfangsbenutzung, die auf die Einheit in Form einer oder mehrerer von der Einheit empfangener Dateneinheiten entfällt; und
beim Schritt des Zugreifens auf eine abgefragte Sendemenge und eine abgefragte Empfangsmenge auf einem Leitwegrechner im Netzwerk zugegriffen wird, wobei die abgefragte Sendemenge eine Menge an Netzwerkbenutzung durch die Einheit in Form von Dateneinheiten ist, die von der Einheit über einen Abfragezeitraum gesendet wurden, und die abgefragte Empfangsmenge eine Menge an Netzwerkbenutzung durch die Einheit in Form von Dateneinheiten ist, die von der Einheit über den Abfragezeitraum empfangen wurden, und die Sendebenutzungsdaten um die abgefragte Sendemenge aufstockt und die Empfangsbenutzungsdaten um die abgefragte Empfangsmenge aufstockt, derart, dass die Sendebenutzungsdaten eine kumulative Menge an Dateneinheiten repräsentieren, die von der Einheit über eine Zeitperiode gesendet wurden, und die Empfangsbenutzungsdaten eine kumulative Menge an Dateneinheiten repräsentieren, die von der Einheit über die Zeitperiode empfangen wurden; und das Verfahren umfasst den folgenden Schritt:
Gewichten der Sendebenutzungsdaten mit einem Sendewert und Gewichten der Empfangsbenutzungsdaten mit einem Empfangswert.

## Revendications

1. Un système informatique (160), susceptible d'être connecté à un réseau (160A), le système informatique comprenant :
des moyens de stockage (150), pour stocker de façon cumulative des comptages d'unités d'information, les moyens de stockage comprenant un enregistrement ayant une information d'utilisation associée à une entité (110, 120) connectée au réseau, en termes d'une ou plusieurs unités d'information ;
des moyens (600), pour accéder à une quantité scrutée dans un routeur (130) sur le réseau, la quantité scrutée étant une indication quantitative de l'usage du réseau en termes d'unités d'information associées à l'entité sur une période de scrutation ; et
des moyens, pour incrémenter l'information d'usage avec la quantité scrutée, de manière que l'information d'usage représente une quantité cumulative d'usage du réseau, par l'entité, sur une période de temps ;
**caractérisé en ce que** l'enregistrement comprend un ou plusieurs champs d'usage, contenant une quantité cumulative d'usage en émission du réseau, utilisée par l'entité, en termes d'une ou plusieurs unités d'information envoyée(s) par l'entité, et une quantité cumulative d'usage en réception du réseau, utilisée par une entité, en termes d'une ou plusieurs unités d'information reçue(s) par l'entité ;
les moyens pour obtenir l'accès étant adaptés pour l'accès d'une quantité scrutée en émission et d'une quantité scrutée en réception dans un routeur sur le réseau, la quantité scrutée en émission étant une quantité d'usage de réseau faite par l'entité, en termes d'unités d'information envoyées par l'entité sur une période de scrutation, la quantité scrutée en réception étant une quantité d'usage du réseau par l'entité, en termes d'unités d'information reçues par l'entité sur la période de scrutation, et étant adaptés pour incrémenter l'information d'usage en émission avec la quantité scrutée en émission, et l'information d'usage en réception avec la quantité scrutée en réception, de manière que l'information d'usage en émission représente une quantité cumulative d'unités d'information ayant été envoyées par l'entité sur une période de temps, et que l'information d'usage en réception représente une quantité cumulative d'unités d'information reçues par l'entité sur la période de temps ; et le système comprend :
un processus de pondération, adapté pour pondérer l'information d'usage en émission avec un poids en émission et pour pondérer l'information d'usage en réception avec un poids en réception.

2. Un système selon la revendication 1, dans lequel l'entité est un utilisateur (110).

3. Un système selon la revendication 1, dans lequel l'entité est un élément d'une classe.

4. Un système selon la revendication 1, dans lequel l'entité est un fournisseur de services (120).

5. Un système selon la revendication 1, comprenant le routeur.

6. Un système selon la revendication 1, dans lequel les unités d'information comprennent l'une quelconque parmi les unités suivantes : un paquet, une cellule, un octet et un bit.

7. Un système selon la revendication 1, dans lequel l'entité est identifiée par une adresse de réseau.

8. Un système selon la revendication 7, dans lequel l'adresse de réseau change en fonction du temps.

9. Un système selon la revendication 1, dans lequel le poids en émission comprend l'un quelconque des éléments suivants : un coût de l'unité d'information, un "1" et un "0".

10. Un système selon la revendication 1, dans lequel le poids en réception comprend l'un quelconque des éléments suivants : un coût de l'unité d'information, un "1" et un "0".

11. Un système selon la revendication 1, dans lequel une première entité est un utilisateur et une deuxième entité est un fournisseur de services et le poids en émission et le poids en réception pour l'utilisateur sont fixés à "0", et le poids en émission et le poids en réception pour le fournisseur de service sont fixés à un ou plusieurs coûts, pour l'unité d'information.

12. Un système, tel qu'indiqué à la revendication 1, dans lequel une première entité est un premier utilisateur, et une deuxième entité est un deuxième utilisateur, et une troisième entité est un fournisseur de services, et le poids en émission pour le premier utilisateur est fixé à un premier coût d'expédition, le poids en réception pour le premier utilisateur est fixé à un premier coût en réception, le poids en émission pour le deuxième utilisateur est fixé à un deuxième coût en émission, le poids en réception pour le deuxième utilisateur est fixé à un deuxième coût en réception, le poids en émission pour le fournisseur de service est fixé à un coût en émission par le fournisseur, le poids en réception pour le fournisseur de services est fixé à un coût en réception pour le fournisseur.

13. Un système selon la revendication 1, dans lequel l'usage en émission d'une ou plusieurs entités est divisé en usage sur deux périodes de temps ou plus, et chacune des périodes de temps est d'un poids de période respectif.

14. Un système selon la revendication 1, dans lequel l'usage en réception d'une ou plusieurs entités est divisé en usage sur deux périodes de temps ou plus, et chacune des périodes de temps présente un poids de période respectif.

15. Un système selon la revendication 1, dans lequel l'information d'usage en émission et l'information d'usage en réception pour deux entités ou plus sont comparées.

16. Un procédé de comptage d'une pluralité d'unités d'information sur un réseau (160), comprenant les étapes consistant à :
stocker de façon cumulative des comptages d'une pluralité d'unités d'information dans un enregistrement dans une structure de données, les unités d'information dans chacun des enregistrements étant une information d'usage, associée à une entité (110, 120) connectée au réseau ;
établir l'accès d'une quantité scrutée dans un routeur (130) sur le réseau, la quantité scrutée étant une quantité d'usage du réseau en termes d'unités d'information associées à l'entité sur une période de scrutation ; et
effectuer l'incrémentation de l'information d'usage avec la quantité scrutée, de manière que l'information d'usage représente une quantité cumulative d'usage du réseau par l'entité sur une période de temps ;
**caractérisé en ce que**
l'enregistrement comprend un ou plusieurs champs d'usage, contenant une quantité cumulative d'usage en émission du réseau, utilisée par l'entité en termes d'une ou plusieurs unités d'information envoyées par l'entité, et une quantité cumulative d'usage en réception du réseau utilisée par
une entité en termes d'une ou plusieurs unités d'information reçues par l'entité ; et
l'étape d'accès opère un accès à la quantité scrutée en émission et la quantité scrutée en réception dans un routeur sur le réseau, la quantité scrutée en émission étant une quantité d'usage du réseau faite par l'entité en termes d'unités d'information ayant été envoyées par l'entité sur une période de scrutation, la quantité scrutée en réception étant une quantité d'usage de réseau faite par l'entité en termes d'unités d'information reçues par l'entité sur la valeur de la période de scrutation, et incrémente l'information d'usage en émission avec la quantité scrutée en émission et incrémente l'information d'usage en réception avec la quantité scrutée en réception, de manière que l'information d'usage en émission représente une quantité cumulative d'unités d'information, ayant été envoyée par l'unité sur une période de temps, et que l'information d'usage en réception représente une quantité d'unités d'information, ayant été reçues par l'entité sur la valeur de la période de temps ; et le procédé comprend l'étape consistant à
pondérer l'information d'usage en émission, avec un poids en émission, et pondérer l'information d'usage en réception, avec un poids en réception.
